# FASCICULE DE BREVET EUROPEEN

(11) **EP 4 169 648 B1**
(45) Date de publication et mention de la délivrance du brevet: **19.02.2025**
(21) Numéro de dépôt: 22194720.3
(22) Date de dépôt: 08.09.2022
(51) Int. Cl.: B23K 9/04, B23K 9/173, B23K 15/00, B23K 26/00, B23K 26/70

(54) **TÊTE DE DÉPOSE D'UNE MACHINE D'IMPRESSION TRIDIMENSIONNELLE CONFIGURÉE POUR DÉPOSER PLUSIEURS FILS SIMULTANÉMENT ET MACHINE D'IMPRESSION TRIDIMENSIONNELLE COMPORTANT LADITE TÊTE DE DÉPOSE**
ABSETZKOPF EINER 3D-DRUCKMASCHINE, DER ZUM GLEICHZEITIGEN ABSETZEN MEHRERER FÄDEN KONFIGURIERT IST, UND 3D-DRUCKMASCHINE MIT DIESEM ABSETZKOPF
HEAD FOR DEPOSITING FOR A THREE-DIMENSIONAL PRINTING MACHINE CONFIGURED FOR SIMULTANEOUSLY DEPOSITING A PLURALITY OF WIRES AND MACHINE FOR THREE-DIMENSIONAL PRINTING COMPRISING SAID HEAD FOR DEPOSITING

(30) Priorité: 16.09.2021 FR 2109706
(43) Date de publication de la demande: 26.04.2023
(73) Titulaire: AIRBUS OPERATIONS (S.A.S.), 31060 Toulouse (FR)
(72) Inventeur: SICRE, Matthieu, 31060 Toulouse (FR)
(74) Mandataire: Fantin, Laurent

(56) Documents cités:
- WO-A1-2019/246308
- CN-A- 110 125 518
- CN-Y- 2 683 302
- DE-A1- 10 204 252
- US-A- 3 694 620

## Description

La présente demande se rapporte à une tête de dépose d'une machine d'impression tridimensionnelle configurée pour déposer plusieurs fils simultanément ainsi qu'à une machine d'impression tridimensionnelle comportant ladite tête de dépose, voir les revendications 1 et 9.

Dans le domaine aéronautique, certaines pièces en titane, comme une structure primaire d'un mât d'un réacteur, sont réalisées en assemblant plusieurs pièces complexes usinées dans des blocs de matière. Cette technique de fabrication est relativement longue et génère beaucoup de pertes de matière sous forme de copeaux de titane qui ne peuvent pas être réutilisés.

Pour réduire la quantité de déchets, les procédés de fabrication additive permettent de réaliser des pièces en empilant des couches de matière les unes sur les autres.

Selon un procédé de fabrication additive par dépôt de matière sous énergie focalisée, appelé DED pour « Directed Energy Deposition » en anglais, la matière sous forme d'un fil est déposée grâce à une tête de dépose simultanément à un apport d'énergie sous la forme d'un faisceau laser ou d'un faisceau d'électrons par exemple.

Selon un mode de réalisation, la tête de dépose comprend un dévidoir supportant une bobine de fil, un système d'entraînement du fil configuré pour tirer le fil de la bobine et le pousser en direction d'un système de guidage traversé par le fil et positionné au plus près de la zone de dépose. Cette tête de dépose est configurée pour déposer un unique fil.

Le taux de matière déposée dépendant du diamètre du fil déposé et de sa vitesse de dévidage, pour obtenir un taux de matière déposée et une cadence de production élevés, il est nécessaire d'utiliser un fil avec une section importante. Toutefois, plus la section du fil est importante moins l'état de surface de la pièce obtenue est satisfaisant.

Le document CN2683302 (décrivant le préambule de la revendication 1) montre une machine d'impression tridimensionnelle qui comprend une tête de dépose alimentée par plusieurs bobines de fils supportées chacune par un dévidoir. Cette solution complexifie la gestion du défilement des fils déposés.

Le document DE10204252 décrit une machine comprenant deux dévidoirs supportant chacun une bobine de fil et équipés chacun d'un système de freinage.

La présente invention vise à remédier à tout ou partie des inconvénients de l'art antérieur.

A cet effet, l'invention a pour objet une tête de dépose pour une machine d'impression tridimensionnelle conformément à la revendication 1, et comportant au moins un dévidoir, un système d'entraînement d'au moins un fil ainsi qu'un système de guidage du fil positionné à proximité d'une zone de dépose en fonctionnement, le système d'entraînement comprenant un galet d'entraînement configuré pour pivoter autour d'un axe de pivotement selon une vitesse de rotation déterminée en fonction d'une vitesse de défilement du fil souhaitée, le galet d'entraînement présentant une surface latérale cylindrique et coaxiale à l'axe de pivotement ainsi qu'une gorge positionnée sur la surface latérale dans un plan sensiblement perpendiculaire à l'axe de pivotement, le système de guidage comprenant un guide-fil qui présente une première extrémité, une deuxième extrémité proche de la zone de dépose en fonctionnement ainsi qu'un trou de passage débouchant au niveau de chacune des première et deuxième extrémités, le trou de passage présentant une section de passage au niveau de la deuxième extrémité ayant une section sensiblement identique à la section du fil à guider, le dévidoir comprenant plusieurs bobines de fil, une pour chaque fil à déposer simultanément, en ce que le galet d'entraînement présentant plusieurs gorges, une pour chaque fil à déposer simultanément, le trou de passage du guide-fil comprenant plusieurs sections de passage, une pour chaque fil à déposer simultanément.

Selon l'invention, le dévidoir comprend au moins un support cylindrique sur lequel sont enfilées plusieurs bobines de fil et, pour au moins une bobine de fil, un système de freinage par friction pour limiter la rotation de la bobine de fil qui comporte un corps monté sur l'extrémité libre du support, un accouplement reliant le corps et la bobine de fil la plus proche de l'extrémité libre ainsi qu'un mécanisme de friction limitant par friction un mouvement de pivotement du corps par rapport au support, chaque bobine comportant un trou traversant qui présente un diamètre ajusté à celui du support de manière à ce que chaque bobine puisse pivoter librement sur le support.

Selon un premier avantage, cette tête de dépose permet d'améliorer l'état de surface de la pièce obtenue dans la mesure où les sections de plusieurs fils déposés simultanément se rapprochent plus d'une section rectangulaire idéale d'une couche de matière qu'un unique fil. Selon un autre avantage, le fait de déposer simultanément plusieurs fils permet à section de fil constante d'augmenter le taux de matière déposée.

Selon une autre caractéristique, le corps comprend des première et deuxième parties tubulaires séparées par une fente transversale qui s'étend sur une partie de la section transversale du corps, la première partie tubulaire étant montée sur le support avec un ajustement glissant, la deuxième partie tubulaire comportant une fente longitudinale qui s'étend jusqu'à la fente transversale de manière à ce que la deuxième partie tubulaire présente une section transversale en C avec deux extrémités.

Selon une autre caractéristique, le mécanisme de friction comprend une grenouillère reliant les extrémités de la section transversale en C de la deuxième partie tubulaire.

Selon une autre caractéristique, l'accouplement comprend au moins une branche radiale qui présente une première extrémité reliée au corps ainsi qu'une deuxième extrémité reliée à la bobine de fil par un élément de liaison démontable.

Selon une autre caractéristique, le dévidoir comprend une face d'appui, le support comportant une première extrémité reliée à ladite face d'appui, une extrémité libre et un axe sensiblement perpendiculaire à la face d'appui, le support étant dimensionné pour supporter au moins deux bobines de fil de sorte qu'une première bobine de fil soit proche de l'extrémité libre du support et une deuxième bobine de fil soit plaquée contre la face d'appui. En complément, le mécanisme de freinage est monté sur le support de manière à ce que la deuxième bobine de fil soit maintenue plaquée contre la face d'appui par la première bobine de fil, elle-même maintenue plaquée contre la deuxième bobine de fil par le mécanisme de friction.

Selon une autre caractéristique, le système d'entraînement comprend un guide-fil amont ou aval, positionné en amont ou en aval du galet d'entraînement selon le sens de défilement des fils, comportant un corps qui s'étend entre des première et deuxième extrémités et présente un trou de passage débouchant à chacune des première et deuxième extrémités, la deuxième extrémité étant positionnée la plus proche possible du galet d'entraînement afin que les fils restent rectilignes entre le guide-fil amont ou aval et le galet d'entraînement, le trou de passage du guide-fil amont ou aval comprenant une section de passage pour chaque fil à déposer simultanément, chaque section de passage ayant une section sensiblement identique à la section du fil à guider.

Selon une autre caractéristique, les sections de passage sont séparées entre elles d'une distance sensiblement égale à celle séparant les gorges du galet d'entraînement.

Selon une autre caractéristique, chaque section de passage présente un tronçon rectiligne qui s'étend à partir de la deuxième extrémité sur quelques millimètres, les tronçons des différentes sections de passage étant parallèles entre eux et orientés selon une direction tangente au galet d'entraînement.

L'invention a également pour objet une machine d'impression tridimensionnelle comprenant une tête de dépose selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une tête de dépose illustrant un mode de réalisation de l'invention,
- La figure 2 est une vue en perspective d'un système de freinage d'un dévidoir illustrant un mode de réalisation de l'invention,
- La figure 3 est une vue latérale du système de freinage visible sur la figure 2,
- La figure 4 est une coupe du système de freinage selon la ligne IV-IV de la figure 3,
- La figure 5 est une vue de face d'un système d'entraînement de plusieurs fils illustrant un mode de réalisation de l'invention,
- La figure 6 est une coupe du système d'entraînement des fils selon la ligne VI-VI de la figure 5,
- La figure 7 est une coupe du système d'entraînement des fils selon la ligne VII-VII de la figure 5,
- La figure 8 est une vue de dessus du système d'entraînement visible sur la figure 5,
- La figure 9 est une vue en perspective d'un système de guidage de plusieurs fils illustrant un mode de réalisation de l'invention,
- La figure 10 est une coupe du système de guidage selon la ligne X-X de la figure 9, et
- La figure 11 est une comparaison de deux coupes d'une pièce obtenue à partir de la fusion de deux fils sur la partie A et d'un seul fil sur la partie B.

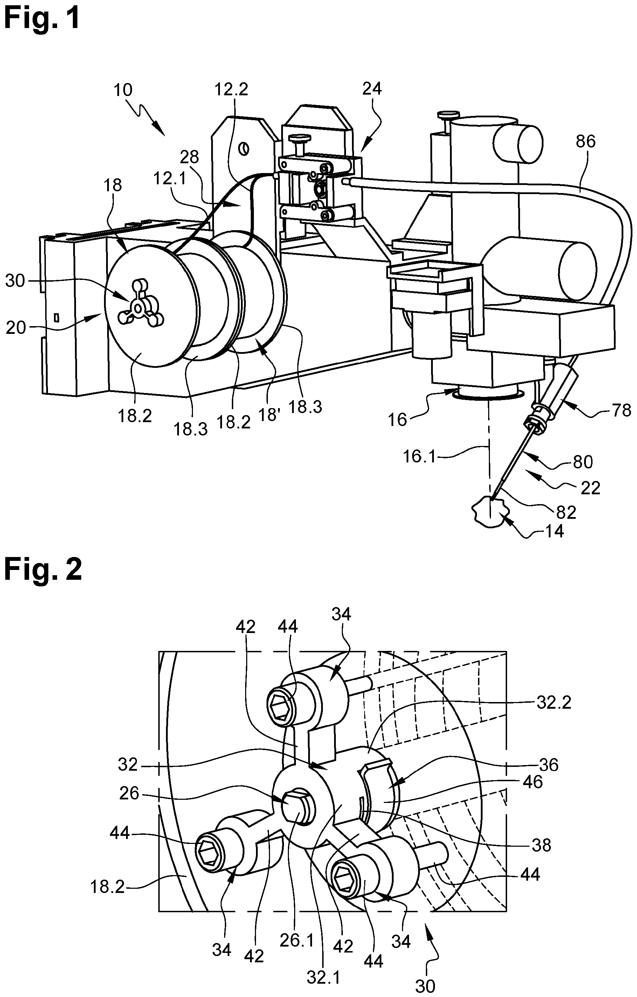

Selon un mode de réalisation visible sur la figure 1, une tête de dépose 10 d'une machine d'impression tridimensionnelle est configurée pour déposer simultanément au moins deux fils 12.1, 12.2 au niveau d'une zone de dépose 14.

Selon une configuration, la tête de dépose 10 comprend une source d'énergie focalisée 16 configurée pour générer un faisceau d'énergie 16.1 orienté en direction de la zone de dépose 14.

Selon une configuration, la source d'énergie focalisée peut être supportée par une autre partie de la machine d'impression tridimensionnelle.

Selon une application, les fils 12.1, 12.2 sont en titane et présentent chacun un diamètre de l'ordre de 1,6 mm. Bien entendu, l'invention n'est pas limitée à cette matière ou à ce diamètre pour les fils 12.1, 12.2, ces derniers pouvant être dans le même matériau ou dans des matériaux différents.

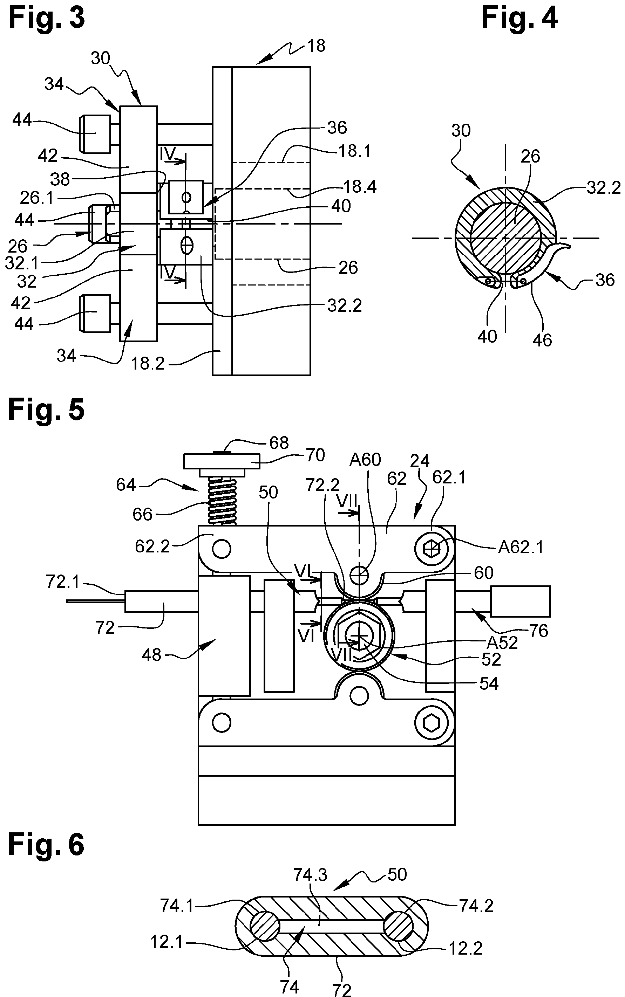

Selon un mode de réalisation visible sur les figures 1 à 3, chaque fil 12.1, 12.2 est conditionné sur une bobine de fil 18 qui présente un moyeu 18.1 (visible sur la figure 3) et deux flasques 18.2, 18.3 à chaque extrémité du moyeu 18.1, le fil étant enroulé sur le moyeu 18.1 entre les deux flasques 18.2, 18.3. Le moyeu 18.1 présente un trou traversant 18.4 qui débouche à chaque extrémité du moyeu 18.1. Ce trou traversant 18.4 est sensiblement coaxial à ce moyeu 18.1 et perpendiculaire aux flasques 18.2, 18.3.

Selon l'invention, la tête de dépose 10 comprend au moins un dévidoir 20 comportant plusieurs bobines de fil 18, une pour chaque fil à déposer simultanément, un système de guidage 22 des fils 12.1, 12.2 positionné à proximité de la zone de dépose 14 ainsi qu'un système d'entraînement 24 configuré pour tirer les fils 12.1, 12.2, les faire sortir du dévidoir 20 et les pousser en direction du système de guidage 22.

Selon l'invention, le dévidoir 20 comprend au moins un support 26 cylindrique sur lequel est enfilée les bobines de fil 18. Les diamètres du support 26 et du trou traversant 18.4 de la bobine de fil 18 sont ajustés de manière à ce que la bobine de fil 18 puisse pivoter librement sur le support 26.

Selon une configuration, le dévidoir 20 comprend une face d'appui 28 sur laquelle est rapporté le support 26, l'axe du support 26 étant sensiblement perpendiculaire au plan de la face d'appui 28. Selon cette configuration, le support 26 présente une première extrémité 26.1, dite libre, distante de la face d'appui 28 et une deuxième extrémité reliée à la face d'appui 28. Le dévidoir 20 peut comprendre plusieurs supports 26, par exemple un pour chaque bobine de fil 18. Le support 26 est configuré pour supporter plusieurs bobines de fil 18, 18', comme illustré sur la figure 1. Le support 26 présente une longueur (dimension prise entre la face d'appui 28 et son extrémité libre 26.1) supérieure à la somme des largeurs (dimensions prises selon l'axe du moyeu 18.1) des bobines de fil 18, 18' supportées par le support 26 de sorte que son extrémité libre 26.1 soit en saillie par rapport aux bobines de fil. Selon un agencement visible sur la figure 1, le support 26 supporte deux bobines de fil 18, 18', la première bobine de fil 18 présentant un flasque 18.2 positionné à proximité de l'extrémité libre 26.1 du support 26, la deuxième bobine de fil 18' présentant un flasque 18.3 plaqué contre la face d'appui 28.

Selon l'invention, le dévidoir 20 comprend, pour au moins une bobine de fil 18, un système de freinage 30 par friction pour limiter la rotation de la bobine de fil 18 lorsque le système d'entraînement 24 cesse de tirer les fils 12.1, 12.2. Selon une configuration non représentée, le dévidoir 20 comprend un système de freinage 30 pour chaque bobine de fil 18.

Selon une configuration visible sur les figures 1 à 4, chaque support 26 comprend un système de freinage 30.

Le système de freinage 30 comprend un corps 32 monté sur l'extrémité libre 26.1 du support 26, un accouplement 34 reliant le corps 32 et la première bobine de fil 18 (la plus proche de l'extrémité 26.1) ainsi qu'un mécanisme de friction 36 limitant par friction le mouvement de pivotement du corps 32 par rapport au support 26.

Selon une configuration, le corps 32 est un tube enfilé sur le support 26 présentant des première et deuxième parties tubulaires 32.1, 32.2 séparées par une fente transversale 38 qui s'étend sur une partie (approximativement la moitié) de la section transversale du corps 32. La première partie tubulaire 32.1 est montée sur le support 26 avec un ajustement glissant. La deuxième partie tubulaire 32.2 présente une fente longitudinale 40 qui s'étend jusqu'à la fente transversale 38 de manière à ce que la deuxième partie tubulaire 32.2 présente une section transversale en C.

L'accouplement 34 comprend au moins une branche radiale 42 qui présente une première extrémité reliée au corps 32, plus particulièrement à la première partie tubulaire 32.1, ainsi qu'une deuxième extrémité reliée à la première bobine de fil 18 par un élément de liaison démontable, comme une vis 44. Selon un agencement, l'accouplement 34 comprend trois branches radiales 42 formant entre elles un angle de 120°. Bien entendu, l'invention n'est pas limitée à cette solution pour accoupler le corps 32 et la première bobine de fil 18 de manière démontable.

Selon un mode de réalisation visible sur la figure 4, le mécanisme de friction 36 comprend une grenouillère 46 reliant les extrémités de la section transversale en C de la deuxième partie tubulaire 32.2, ladite grenouillère 46 étant configurée pour déformer cette deuxième partie tubulaire 32.2 et provoquer un pincement du support 26.

Pour obtenir le freinage de la deuxième bobine de fil 18', le mécanisme de freinage 30 est monté sur le support 26 de manière à ce que la deuxième bobine de fil 18' soit maintenue plaquée contre la face d'appui 28 par la première bobine de fil 18, elle-même maintenue plaquée contre la deuxième bobine de fil 18' par le mécanisme de friction 36. Ainsi, le freinage de la deuxième bobine de fil 18' est obtenu en raison du frottement entre les première et deuxième bobines de fil 18, 18' ainsi qu'entre la deuxième bobine de fil 18' et la face d'appui 28.

Quel que soit le mode de réalisation, le (ou les) système(s) permet(tent) aux bobines de fil 18, 18' de pivoter indépendamment les unes des autres. Ainsi, même si les bobines n'ont pas la même quantité de fil, les différents fils dévidés sont tirés à la même vitesse par le système d'entraînement 24.

Selon un mode de réalisation visible sur les figures 5 à 8, le système d'entraînement 24 comprend un châssis 48 supportant un guide-fil amont 50 ainsi qu'un galet d'entraînement 52.

Ce galet d'entraînement 52 est monté sur un arbre 54 entraîné en rotation par une motorisation (non représentée). Le galet d'entraînement 52 est accouplé à l'arbre 54 de manière à ce qu'il soit immobilisé en rotation par rapport à l'arbre 54. Quel que soit le montage, le galet d'entraînement 52 pivote autour d'un axe de pivotement A52 selon une vitesse de rotation déterminée en fonction de la vitesse de défilement des fils souhaitée.

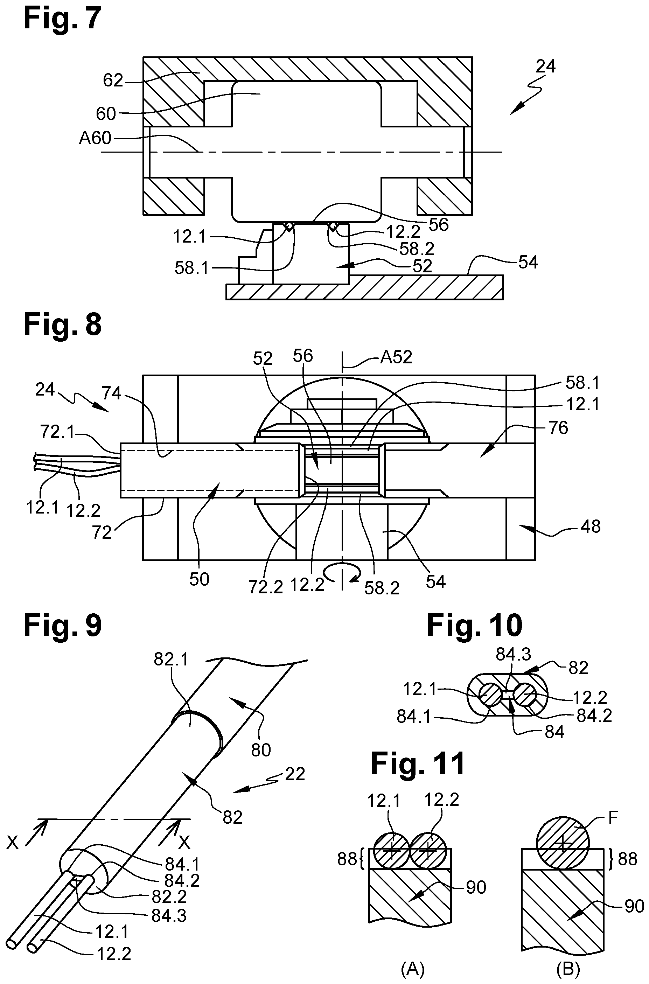

Ce galet d'entraînement 52 présente une surface latérale 56 cylindrique et coaxiale à l'axe de pivotement A52 ainsi qu'une gorge 58.1, 58.2 pour chaque fil 12.1, 12.2 à entraîner, positionnée sur la circonférence de la surface latérale 56, dans un plan sensiblement perpendiculaire à l'axe de pivotement A52. Selon l'exemple illustré sur la figure 7, le galet d'entraînement 52 comprend deux gorges 58.1, 58.2. Bien entendu, l'invention n'est pas limitée à ce nombre de gorges.

Chaque gorge 58.1, 58.2 présente une section telle que le fil 12.1, 12.2 soit en saillie par rapport à la surface latérale 56 lorsqu'il est positionné dans la gorge 58.1, 58.2. A titre d'exemple, chaque gorge 58.1, 58.2 présente une section en V.

Selon l'invention, tous les fils déposés simultanément sont entraînés par le même galet d'entraînement 52 de manière à garantir la même vitesse de défilement et de dépose.

La surface des gorges 58.1, 58.2 et/ou le couple de matière galet d'entraînement/fils sont configurés de manière à renforcer l'adhérence des fils 12.1, 12.2 sur le galet d'entraînement 52.

Selon une configuration, le système d'entraînement 24 comprend un galet presseur 60 pour presser les fils 12.1, 12.2 contre le galet d'entraînement 52 et renforcer ainsi l'adhérence des fils 12.1, 12.2 sur le galet d'entraînement 52.

Ce galet presseur 60 est monté pivotant par rapport à un bras 62 de manière à pouvoir pivoter librement selon un axe de pivotement A60 parallèle à l'axe de pivotement A52 du galet d'entraînement 52. Ce bras 62 est relié au châssis 48 de manière à occuper une première position, visible sur la figure 7, dans laquelle le galet presseur 60 exerce une pression sur les fils 12.1, 12.2 en direction du galet d'entraînement 52 et une deuxième position dans laquelle le galet presseur 60 est écarté du galet d'entraînement 52 pour permettre la mise en place des fils 12.1, 12.2.

Selon un agencement, le bras 62 présente une première extrémité 62.1 reliée au châssis 48 par un axe de rotation A62.1 sensiblement parallèle aux axes de pivotement A52, A60 du galet d'entraînement 52 et du galet presseur 60. Ainsi, le bras 62 peut pivoter autour de l'axe de rotation A62.1 dans un premier sens qui tend à le rapprocher du galet d'entraînement 52 ou dans un deuxième sens qui tend à l'en écarter.

Selon une configuration, le système d'entraînement 24 comprend un mécanisme de réglage 64 pour ajuster la pression exercée par le galet presseur 60 sur les fils 12.1, 12.2. Ce mécanisme de réglage 64 comprend un ressort 66 prenant appui contre la deuxième extrémité 62.2 du bras, configuré pour exercer un effort sur le bras 62 tendant à le faire pivoter dans le premier sens. En complément, le mécanisme de réglage 64 comprend une tige filetée 68 reliée au châssis 48, traversant la deuxième extrémité 62.2 du bras 62 et sur laquelle est enfilé le ressort 66 ainsi qu'un écrou 70 configuré pour se visser sur la tige filetée 68 et comprimer plus ou moins le ressort 66 contre le bras 62.

Selon un mode de réalisation, le guide-fil amont 50 est positionné en amont du galet d'entraînement 52 et comprend un corps 72, fixé sur le châssis 48, qui s'étend entre des première et deuxième extrémités 72.1, 72.2 et présente un trou de passage 74 débouchant à chacune des extrémités 72.1, 72.2. Selon une configuration, la première extrémité 72.1 est éloignée du galet d'entraînement 52, la deuxième extrémité 72.2 étant positionnée au plus près du galet d'entraînement 52 afin que les fils 12.1, 12.2 restent rectilignes entre le guide-fil amont 50 et le galet d'entraînement 52. Par au plus près, on entend que la deuxième extrémité 72.2 est séparée des points de contact des fils 12.1, 12.2 avec le galet d'entraînement 52 d'une distance inférieure ou égale à 0,5 mm.

Au niveau de la première extrémité 72.1, le trou de passage 74 présente une section circulaire nettement supérieure à la section des fils 12.1, 12.2. Au niveau de la deuxième extrémité 72.2, le trou de passage 74 comprend, pour chaque fil 12.1, 12.2, une section de passage 74.1, 74.2 ayant une section sensiblement identique à la section du fil 12.1, 12.2 guidé. Selon une configuration, les sections de passage 74.1, 74.2 sont disjointes et séparées par de la matière. Selon une autre configuration visible sur la figure 6, les sections de passage 74.1, 74.2 sont reliées par une fente 74.3 qui présente une épaisseur inférieure au diamètre des fils 12.1, 12.2.

Le guide-fil amont 50 comprend une section de passage 74.1, 74.2 pour chacun des fils 12.1, 12.2 déposés simultanément.

Chaque section de passage 74.1, 74.2 présente un tronçon rectiligne qui s'étend à partir de la deuxième extrémité sur quelques millimètres. Les tronçons des différentes sections de passage sont parallèles entre eux et orientés selon une direction tangente au galet d'entraînement 52.

Les sections de passage 74.1, 74.2 sont séparées entre elles d'une distance sensiblement égale à la distance séparant les gorges 58.1, 58.2 du galet d'entraînement 52. Ainsi, les sections de passage permettent de prépositionner chacun des fils 12.1, 12.2 au droit d'une gorge 58.1, 58.2.

La section du trou de passage 74 peut évoluer progressivement entre les première et deuxième extrémités 72.1, 72.2.

Selon un mode de réalisation, le système d'entraînement 24 comprend un guide-fil aval 76 positionné après le galet d'entraînement 52 selon le sens de défilement des fils 12.1, 12.2. Selon une configuration, le guide-fil aval 76 est identique au guide-fil amont 50, les guides-fils amont et aval 50, 76 étant positionnés de manière symétrique par rapport à un plan perpendiculaire aux fils 12.1, 12.2 passant par l'axe de pivotement A52 du galet d'entraînement 52.

Selon un mode de réalisation, le système de guidage 22 comprend un corps 78, un tube de guidage 80 rectiligne, rigide, supporté par le corps 78 et dans lequel cheminent les fils 12.1, 12.2 à déposer simultanément ainsi qu'un guide-fil 82 positionné au niveau d'une extrémité du tube de guidage 80 orientée vers la zone de dépose14. Selon une configuration, le guide-fil 82 du système de guidage 22 s'étend entre des première et deuxième extrémités 82.1, 82.2 et présente un trou de passage 84 débouchant à chacune des extrémités 82.1, 82.2. Selon une configuration, la première extrémité 82.1 est reliée au tube de guidage 80 et la deuxième extrémité 82.2 est positionnée au plus près de la zone de dépose 14 en fonctionnement. Par au plus près, on entend que la deuxième extrémité 82.2 est séparée de la zone de dépose 14 d'une distance inférieure ou égale à 5 cm, de préférence inférieure ou égale à 3 cm.

Au niveau de la première extrémité 82.1, le trou de passage 84 présente une section circulaire nettement supérieure à la section des fils 12.1, 12.2. Au niveau de la deuxième extrémité 82.2, le trou de passage 84 comprend, pour chaque fil 12.1, 12.2, une section de passage 84.1, 84.2 ayant une section sensiblement identique à la section du fil 12.1, 12.2 guidé. Selon une configuration visible sur la figure 10, les sections de passage 84.1, 84.2 sont reliées par une fente 84.3 qui présente une épaisseur inférieure au diamètre des fils 12.1, 12.2.

Le guide-fil 82 comprend une section de passage 84.1, 84.2 pour chacun des fils 12.1, 12.2 déposés simultanément.

Chaque section de passage 84.1, 84.2 présente un tronçon rectiligne qui s'étend à partir de la deuxième extrémité 82.2 sur quelques millimètres. Les tronçons des différentes sections de passage sont parallèles entre eux.

Les sections de passage 84.1, 84.2 sont faiblement espacés pour que les fils soient proches les uns des autres au moment du contact avec la zone de dépose 14.

En fonctionnement, le guide-fil 82 est orienté de manière à ce que les sections de passage 84.1, 84.2 soient alignées selon une direction parallèle à un plan de dépose sur lequel est formée la dernière couche de matière.

Selon un mode de réalisation, la tête de dépose 10 comprend une gaine de guidage 86 qui s'étend du système d'entraînement 24 (plus particulièrement du guide-fil aval 76) jusqu'au système de guidage 22 (plus particulièrement jusqu'au tube de guidage 80).

La tête de dépose décrite permet de déposer simultanément plusieurs fils de même matière ou de matières différentes. Ainsi, elle permet à section de fil constante d'augmenter le taux de matière déposée. Selon un autre avantage visible sur la figure 11, le fait de prévoir deux fils 12.1, 12.1, comme illustré sur la partie A, au lieu d'un seul fil F, comme illustré sur la partie B, permet de se rapprocher de la section d'une couche déposée 88 et d'améliorer la géométrie de la couche déposée et, in fine, l'état de surface de la pièce 90 obtenue.

## Revendications

1. Tête de dépose pour une machine d'impression tridimensionnelle comportant au moins un dévidoir (20), un système d'entraînement (24) d'au moins un fil (12.1, 12.2) ainsi qu'un système de guidage (22) du fil (12.1, 12.2) positionné à proximité d'une zone de dépose (14) en fonctionnement, le système d'entraînement (24) comprenant un galet d'entraînement (52) configuré pour pivoter autour d'un axe de pivotement (A52) selon une vitesse de rotation déterminée en fonction d'une vitesse de défilement du fil (12.1, 12.2) souhaitée, le galet d'entraînement (52) présentant une surface latérale (56) cylindrique et coaxiale à l'axe de pivotement (A52) ainsi qu'une gorge (58.1) positionnée sur la surface latérale (56) dans un plan sensiblement perpendiculaire à l'axe de pivotement (A52), le système de guidage (22) comprenant un guide-fil (82) qui présente une première extrémité (82.1), une deuxième extrémité (82.2) proche de la zone de dépose (14) en fonctionnement ainsi qu'un trou de passage (84) débouchant au niveau de chacune des première et deuxième extrémités (82.1, 82.2), le trou de passage (84) présentant une section de passage (84.1) au niveau de la deuxième extrémité (82.2) ayant une section sensiblement identique à la section du fil (12.1, 12.2) à guider ; le dévidoir (20) comprenant plusieurs bobines de fil (18, 18'), une pour chaque fil (12.1, 12.2) à déposer simultanément, le galet d'entraînement (52) présentant plusieurs gorges (58.1, 58.2), une pour chaque fil (12.1, 12.2) à déposer simultanément, le trou de passage (84) du guide-fil (82) comprenant plusieurs sections de passage (84.1, 84.2), une pour chaque fil (12.1, 12.2) à déposer simultanément, **caractérisé en ce que** le dévidoir (20) comprend au moins un support (26) cylindrique sur lequel sont enfilées les bobines de fil (18, 18) et, pour au moins une bobine de fil (18), un système de freinage (30) par friction pour limiter la rotation de la bobine de fil (18) qui comporte un corps (32) monté sur l'extrémité libre (26.1) du support (26), un accouplement (34) reliant le corps (32) et la bobine de fil (18) la plus proche de l'extrémité libre (26.1) ainsi qu'un mécanisme de friction (36) limitant par friction un mouvement de pivotement du corps (32) par rapport au support (26), chaque bobine (18, 18') comportant un trou traversant (18.1) qui présente un diamètre ajusté à celui du support (16) de manière à ce que chaque bobine (18, 18') puisse pivoter librement sur le support (26).

2. Tête de dépose selon la revendication précédente, **caractérisée en ce que** le corps (32) comprend des première et deuxième parties tubulaires (32.1, 32.2) séparées par une fente transversale (38) qui s'étend sur une partie de la section transversale du corps (32), la première partie tubulaire (32.1) étant montée sur le support (26) avec un ajustement glissant, la deuxième partie tubulaire (32.2) comportant une fente longitudinale (40) qui s'étend jusqu'à la fente transversale (38) de manière à ce que la deuxième partie tubulaire (32.2) présente une section transversale en C avec deux extrémités.

3. Tête de dépose selon la revendication précédente, **caractérisée en ce que** le mécanisme de friction (36) comprend une grenouillère (46) reliant les extrémités de la section transversale en C de la deuxième partie tubulaire (32.2).

4. Tête de dépose selon l'une des revendications précédentes, **caractérisée en ce que** l'accouplement (34) comprend au moins une branche radiale (42) qui présente une première extrémité reliée au corps (32) ainsi qu'une deuxième extrémité reliée à la bobine de fil (18) par un élément de liaison démontable.

5. Tête de dépose selon l'une des revendications précédentes, **caractérisée en ce que** le dévidoir (20) comprend une face d'appui (28), le support (26) comportant une première extrémité reliée à ladite face d'appui (28), l'extrémité libre (26.1) et un axe sensiblement perpendiculaire à la face d'appui (28) ; **en ce que** le support (26) est dimensionné pour supporter au moins deux bobines de fil (18, 18') de sorte qu'une première bobine de fil (18) soit proche de l'extrémité libre (26.1) du support (26) et une deuxième bobine de fil (18') soit plaquée contre la face d'appui (28) et **en ce que** le mécanisme de freinage (30) est monté sur le support (26) de manière à ce que la deuxième bobine de fil (18') soit maintenue plaquée contre la face d'appui (28) par la première bobine de fil (18), elle-même maintenue plaquée contre la deuxième bobine de fil (18') par le mécanisme de friction (36).

6. Tête de dépose selon l'une des revendications précédentes, **caractérisée en ce que** le système d'entraînement (24) comprend un guide-fil amont ou aval (50, 76), positionné en amont ou en aval du galet d'entraînement (52) selon le sens de défilement des fils (12.1, 12.2), comportant un corps (72) qui s'étend entre des première et deuxième extrémités (72.1, 72.2) et présente un trou de passage (74) débouchant à chacune des première et deuxième extrémités (72.1, 72.2), la deuxième extrémité étant positionnée la plus proche possible du galet d'entraînement afin que les fils (12.1, 12.2) restent rectilignes entre le guide-fil amont ou aval (50, 76) et le galet d'entraînement (52), le trou de passage (74) du guide-fil amont ou aval (50, 76) comprenant une section de passage (74.1, 74.2) pour chaque fil (12.1, 12.2) à déposer simultanément, chaque section de passage (74.1, 74.2) ayant une section sensiblement identique à la section du fil (12.1, 12.2) à guider.

7. Tête de dépose selon la revendication précédente, **caractérisée en ce que** les sections de passage (74.1, 74.2) sont séparées entre elles d'une distance sensiblement égale à celle séparant les gorges (58.1, 58.2) du galet d'entraînement (52).

8. Tête de dépose selon la revendication 6 ou 7, **caractérisée en ce que** chaque section de passage (74.1, 74.2) présente un tronçon rectiligne qui s'étend à partir de la deuxième extrémité sur quelques millimètres, les tronçons des différentes sections de passage étant parallèles entre eux et orientés selon une direction tangente au galet d'entraînement (52).

9. Machine d'impression tridimensionnelle comprenant une tête de dépose selon l'une des revendications précédentes.

## Patentansprüche

1. Ablagekopf für eine dreidimensionale Druckmaschine mit wenigstens einem Abwickler (20), einem Antriebssystem (24) für wenigstens ein Filament (12.1, 12.2) sowie einem Führungssystem (22) für das Filament (12.1, 12. 2), das im Betrieb in der Nähe einer Ablagezone (14) positioniert ist, wobei das Antriebssystem (24) eine Antriebsrolle (52) umfasst, die so eingerichtet ist, dass sie um eine Schwenkachse (A52) mit einer Drehgeschwindigkeit schwenkt, die in Abhängigkeit von einer gewünschten Laufgeschwindigkeit des Filaments (12.1, 12.2) bestimmt ist, wobei die Antriebsrolle (52) eine zylindrische und zur Schwenkachse (A52) koaxiale Seitenfläche (56) sowie eine Nut (58.1) aufweist, die auf der Seitenfläche (56) in einer Ebene im Wesentlichen im rechten Winkel zur Schwenkachse (A52) angeordnet ist, wobei das Führungssystem (22) eine Filamentführung (82) aufweist, die ein erstes Ende (82.1), ein sich im Betrieb nahe der Ablagezone (14)befindendes zweites Ende (82.2) sowie ein Durchgangsloch (84) aufweist, das jeweils im Bereich des ersten und zweiten Endes (82.1, 82.2) mündet, wobei das Durchgangsloch (84) einen Durchgangsquerschnitt (84.1) im Bereich des zweiten Endes (82.2) aufweist, der einen Querschnitt hat, der im Wesentlichen identisch mit dem Querschnitt des zu führenden Filaments (12.1, 12.2) ist; wobei die Abwickler (20) mehrere Filamentspulen (18, 18') umfasst, eine für jedes gleichzeitig abzugebende Filament (12.1, 12.2), wobei die Antriebsrolle (52) mehrere Nuten (58.1, 58.2) aufweist, eine für jedes gleichzeitig abzugebende Filament (12.1, 12.2), und wobei das Durchgangsloch (84) der Filamentführung (82) mehrere Durchgangsabschnitte (84.1, 84.2) umfasst, einen für jedes Filament (12.1, 12.2), die gleichzeitig abgelegt werden sollen, **dadurch gekennzeichnet, dass** der Abwickler (20) wenigstens einen zylindrischen Träger (26), auf den die Filamentspulen (18, 18) aufgebracht sind, und für wenigstens eine Filamentspule (18) ein Bremssystem (30) mittels Reibung zur Begrenzung der Drehung der Filamentspule (18) umfasst, das einen Körper (32) aufweist, der auf dem freien Ende (26.1) des Trägers (26) angebracht ist, eine Kupplung (34), die den Körper (32) und die dem freien Ende (26.1) am nächsten liegende Filamentspule (18) verbindet, sowie einen Reibungsmechanismus (36) umfasst, der eine Schwenkbewegung des Körpers (32) in Bezug auf den Träger (26) durch Reibung begrenzt, wobei jede Spule (18, 18') ein Durchgangsloch (18.1) aufweist, dessen Durchmesser an den des Trägers (16) angepasst ist, so dass jede Spule (18, 18') frei auf dem Träger (26) schwenken kann.

2. Ablagekopf nach dem vorhergehenden Anspruch, **dadurch gekennzeichnet, dass** der Körper (32) einen ersten und einen zweiten rohrförmigen Teil (32.1, 32.2) umfasst, die durch einen Querschlitz (38) getrennt sind, der sich über einen Teil des Querschnitts des Körpers (32) erstreckt, wobei der erste rohrförmige Teil (32.1) mit einem Gleitsitz an dem Träger (26) angebracht ist, wobei der zweite röhrenförmige Teil (32.2) einen Längsschlitz (40) aufweist, der sich bis zum Querschlitz (38) erstreckt, so dass der zweite röhrenförmige Teil (32.2) einen C-förmigen Querschnitt mit zwei Enden aufweist.

3. Ablagekopf nach dem vorhergehenden Anspruch, **dadurch gekennzeichnet, dass** der Reibungsmechanismus (36) einen Frosch (46) umfasst, der die Enden des C-förmigen Querschnitts des zweiten rohrförmigen Teils (32.2) verbindet.

4. Ablagekopf nach einem der vorhergehenden Ansprüche, **dadurch gekennzeichnet, dass** die Kupplung (34) wenigstens einen radialen Arm (42) umfasst, der ein erstes Ende aufweist, das mit dem Körper (32) verbunden ist, sowie ein zweites Ende, das über ein lösbares Verbindungselement mit der Filamentspule (18) verbunden ist.

5. Ablagekopf nach einem der vorhergehenden Ansprüche, **dadurch gekennzeichnet, dass** der Abwickler (20) eine Auflagefläche (28) umfasst, wobei der Träger (26) ein mit der Auflagefläche (28) verbundenes erstes Ende, das freie Ende (26.1) und eine Achse aufweist, die im Wesentlichen im rechten Winkel zur Auflagefläche (28) verläuft; dass der Träger (26) so dimensioniert ist, dass er wenigstens zwei Filamentspulen (18, 18') trägt, so dass sich eine erste Filamentspule (18) nahe am freien Ende (26.1) des Trägers (26) befindet und eine zweite Filamentspule (18') gegen die Auflagefläche (28) gedrückt ist, und dass der Bremsmechanismus (30) so an dem Träger (26) angebracht ist, dass die zweite Filamentspule (18') durch die erste Filamentspule (18) gegen die Auflagefläche (28) gedrückt gehalten ist, die ihrerseits durch den Reibungsmechanismus (36) gegen die zweite Filamentspule (18') gedrückt gehalten wird.

6. Ablagekopf nach einem der vorhergehenden Ansprüche, **dadurch gekennzeichnet, dass** das Antriebssystem (24) eine stromaufwärts oder stromabwärts gelegene Filamentführung (50, 76) umfasst, die je nach Laufrichtung der Filamente (12.1, 12.2) stromaufwärts oder stromabwärts der Antriebsrolle (52) angeordnet ist, mit einem Körper (72), der sich zwischen einem ersten und einem zweiten Ende (72.1, 72.2) erstreckt und ein Durchgangsloch (74) aufweist, das an jedem der ersten und zweiten Enden (72.1, 72.2) mündet, wobei das zweite Ende so nah wie möglich an der Antriebsrolle angeordnet ist, damit die Filamente (12.1, 12.2) zwischen der stromaufwärts oder stromabwärts gelegenen Filamentführung (50, 76) und der Antriebsrolle (52) geradlinig bleiben, wobei das Durchgangsloch (74) der stromaufwärts oder stromabwärts gelegenen Filamentführung (50, 76) einen Durchgangsquerschnitt (74.1, 74.2) für jedes gleichzeitig abzulegende Filament (12.1, 12.2) aufweist und wobei jeder Durchgangsabschnitt (74.1, 74.2) einen Querschnitt hat, der im Wesentlichen gleich dem Querschnitt des zu führenden Filaments (12.1, 12.2) ist.

7. Ablagekopf nach dem vorhergehenden Anspruch, **dadurch gekennzeichnet, dass** die Durchgangsabschnitte (74.1, 74.2) voneinander durch einen Abstand getrennt sind, der im Wesentlichen gleich dem Abstand zwischen den Rillen (58.1, 58.2) der Antriebsrolle (52) ist.

8. Ablagekopf nach Anspruch 6 oder 7, **dadurch gekennzeichnet, dass** jeder Durchgangsabschnitt (74.1, 74.2) einen geraden Abschnitt aufweist, der sich vom zweiten Ende aus über einige Millimeter erstreckt, wobei die Abschnitte der verschiedenen Durchgangsabschnitte parallel zueinander verlaufen und in eine tangentiale Richtung zur Antriebsrolle (52) ausgerichtet sind.

9. Dreidimensionale Druckmaschine mit einem Auftragskopf nach einem der vorhergehenden Ansprüche.

## Claims

1. Deposition head for a three-dimensional printer, comprising at least one pay-out device (20), a drive system (24) for driving at least one wire (12.1, 12.2), and a guide system (22) positioned in the vicinity of a deposition zone (14) during operation, the drive system (24) comprising a drive roller (52) configured to pivot about a pivot axis (A52) at a rotational speed determined as a function of a desired speed of travel of the wire (12.1, 12.2), the drive roller (52) having a cylindrical lateral surface (56) coaxial with the pivot axis (A52), and also a groove (58.1) positioned on the lateral surface (56) in a plane substantially perpendicular to the pivot axis (A52), the guide system (22) comprising a wire guide (82) which has a first end (82.1), a second end (82.2) close to the deposition zone (14) during operation, and also a passage hole (84) opening out at each of the first and second ends (82.1, 82.2), the passage hole (84) having a passage section (84.1) at the second end (82.2) having a section substantially identical to the section of the wire (12.1, 12.2) to be guided; the pay-out device (20) comprising several wire spools (18, 18'), one for each wire (12.1, 12.2) to be deposited simultaneously, the drive roller (52) having several grooves (58.1, 58.2), one for each wire (12.1, 12.2) to be deposited simultaneously, the passage hole (84) of the wire guide (82) comprising several passage sections (84.1, 84.2), one for each wire (12.1, 12.2) to be deposited simultaneously, **characterized in that** the pay-out device (20) comprises at least one cylindrical support (26) on which wire spools (18, 18') are threaded and, for at least one wire spool (18), a friction braking system (30) for limiting the rotation of the wire spool (18) which comprises a body (32) mounted on the free end (26.1) of the support (26), a coupling (34) connecting the body (32) and the wire spool (18) closest to the free end (26.1) as well as a friction mechanism (36) limiting, by friction, a pivoting movement of the body (32) with respect to the support (26), each wire spool (18, 18')having a through hole (18.1) which has a diameter adjusted to that of the support (26) so that each wire spool (18, 18') can pivot freely on the support (26).

2. Deposition head as claimed in the preceding claim, wherein the body (32) comprises first and second tubular parts (32.1, 32.2) which are separated by a transverse slot (38) which extends over part of the cross section of the body (32), the first tubular part (32.1) being mounted on the support (26) with a sliding fit, the second tubular part (32.2) comprising a longitudinal slot (40) which extends as far as the transverse slot (38) in such a way that the second tubular part (32.2) has a C-shaped cross section with two ends.

3. Deposition head as claimed in the preceding claim, wherein the friction mechanism (36) comprises a toggle latch (46) connecting the ends of the C-shaped cross section of the second tubular part (32.2).

4. Deposition head as claimed in one of the preceding claims, wherein the coupling (34) comprises at least one radial branch (42) which has a first end connected to the body (32) and a second end connected to the wire spool (18) by a removable connecting element.

5. Deposition head as claimed in one of the preceding claims, wherein the pay-out device (20) comprises a bearing face (28), the support (26) comprising a first end connected to said bearing face (28), the free end (26.1) and an axle substantially perpendicular to the bearing face (28); wherein the support (26) is dimensioned to support at least two wire spools (18, 18') such that a first wire spool (18) is close to the free end (26.1) of the support (26) and a second wire spool (18') is pressed against the bearing face (28), and wherein the braking mechanism (30) is mounted on the support (26) in such a way that the second wire spool (18') is kept pressed against the bearing face (28) by the first wire spool (18), which is itself kept pressed against the second wire spool (18') by the friction mechanism (36).

6. Deposition head as claimed in one of the preceding claims, wherein the drive system (24) comprises an upstream or downstream wire guide (50, 76), positioned upstream or downstream of the drive roller (52) in the direction of travel of the wires (12.1, 12.2), comprising a body (72) which extends between first and second ends (72.1, 72.2) and has a passage hole (74) opening out at each of the first and second ends (72.1, 72.2), the second end being positioned as close as possible to the drive roller so that the wires (12.1, 12.2) remain rectilinear between the upstream or downstream wire guide (50, 76) and the drive roller (52), the passage hole (74) of the upstream or downstream wire guide (50, 76) comprising a passage section (74.1, 74.2) for each wire (12.1, 12.2) to be deposited simultaneously, each passage section (74.1, 74.2) having a section substantially identical to the section of the wire (12.1, 12.2) to be guided.

7. Deposition head as claimed in the preceding claim, wherein the passage sections (74.1,74.2) are separated from one another by a distance substantially equal to that which separates the grooves (58.1, 58.2) of the drive roller (52).

8. Deposition head as claimed in claim 6 or 7, wherein each passage section (74.1, 74.2) has a rectilinear segment which extends from the second end by a few millimeters, the segments of the different passage sections being parallel to one another and being oriented in a direction tangential to the drive roller (52).

9. Three-dimensional printer comprising a deposition head as claimed in one of the preceding claims.
